# EUROPEAN PATENT APPLICATION

(11) **EP 4 779 993 A1**
(43) Date of publication of application: **22.07.2026**
(21) Application number: 24865938.5
(22) Date of filing: 11.09.2024
(51) Int. Cl.: H04N 21/43, H04N 21/414, H04N 21/242, H04N 21/262, H04N 21/443

(54) **CONTENT OUTPUT SYSTEM CAPABLE OF PERFORMING VIRTUAL ELECTRONIC SHELF LABEL FUNCTION**

(30) Priority: 11.09.2023 KR 20230120674; 18.04.2024 KR 20240052391
(71) Applicant: SOLUM CO., LTD., Gyeonggi-do 16914 (KR)
(72) Inventor: LEE, Hyun Suk, Suwon-si, Gyeonggi-do 16543 (KR)
(74) Representative: Kraus & Lederer PartGmbB
(86) International application number: PCT/KR2024/096136
(87) International publication number: WO 2025/058499

(57) **Abstract**

According to one embodiment, a content output system capable of performing a function of a virtual electronic shelf label includes a plurality of display devices configured to output content transmitted from an external source, and a server configured to manage product information and electronic shelf label information for displaying the product information, in which each of the plurality of display devices independently outputs the content and the product information transmitted from the server.

## Description

### [Technical Field]

Various embodiments of the present disclosure relate to a content output system capable of performing a virtual electronic shelf label function, and more particularly, to a system capable of outputting synchronized content through a plurality of display devices while simultaneously outputting product information related thereto.

### [Background Art]

Labels for displaying product information such as selling price, discount information, and country of origin have been used in order to display and sell a plurality of products within a certain space such as a retail store.

Conventionally, product information has mainly been displayed using paper labels on which the product information is handwritten or printed in a standardized format. However, when a change in product information, such as a price change, occurs, the paper label needs to be corrected or replaced with a new paper label. Accordingly, in large retail stores where the number of products is large and changes in product information occur frequently, there is a growing need for an alternative to paper labels.

Recently, an electronic shelf label (ESL) has been proposed as a means to replace paper labels. The electronic shelf label receives product information from a server and displays the received product information on a display. Since such electronic shelf labels can quickly and conveniently change product information, research and development related to electronic shelf labels have been gradually increasing.

Meanwhile, display devices for advertising products are increasingly being introduced into retail stores. By utilizing such display devices, a virtual electronic shelf label may be output together with content output by the display device without arranging a separate electronic shelf label.

### [Disclosure]

### [Technical Problem]

Digital signage refers to a digital medium that delivers various information and advertisements through digital displays that can be controlled via a network in public places and commercial spaces. The display devices used in the above-described retail stores may also be considered a type of digital signage.

As digital signage is increasingly used in retail stores, attempts have been made to use it in conjunction with electronic shelf labels. According to this approach, content for advertising products may be output together with product information related thereto and an electronic shelf label. In this case, when outputting these elements through a single signage device, it becomes an issue how to control the output of the signage.

Meanwhile, as linear signage devices are installed on store shelves in retail stores, a plurality of signage devices may be arranged serially in a row or may be arranged vertically in parallel. Since identical or similar products are generally handled on the same shelf, when product advertisements are displayed through a plurality of signage devices, it is necessary to output content in an overall consistent manner.

For this purpose, synchronization of content output by the signage devices is required. A method has been proposed in which synchronization is performed after checking whether synchronization is required through communication among the plurality of signage devices. However, this method has a disadvantage in that the complexity increases as the number of signage devices increases because communication among the plurality of signage devices is required. In addition, the synchronization process is cumbersome because synchronization is performed only after checking whether synchronization is necessary.

Embodiments provide a content output system in which each of a plurality of display devices that output content outputs product information independently from the content. Embodiments also provide a content output system in which an ESL server interworks with a content management system (CMS) server to transmit product information to display devices so that the product information is output independently from the content.

Embodiments further provide a content output system in which system times of the display devices are synchronized through network equipment and a synchronization time point of content is preset so that video playback is started at the corresponding time point in each display device, thereby synchronizing video output among the display devices.

The problems to be solved by the embodiments are not limited to the above-described problems, and other problems not mentioned herein may be clearly understood by those skilled in the art from the present specification and the accompanying drawings.

### [Technical Solution]

According to one embodiment, there is provided a content output system including: a plurality of display devices configured to output content transmitted from an external source; and a server configured to manage product information and electronic shelf label information for displaying the product information, in which each of the plurality of display devices independently outputs the content and the product information transmitted from the server.

### [Advantageous Effects]

According to a content output system according to embodiments, "content for advertising products" and "product information and a virtual electronic shelf label including the product information" can be output through a display device, thereby providing convenience in management to an administrator of a retail store.

In addition, according to the content output system according to the embodiments, the content output system may be configured easily because a separate physical connection between a plurality of display devices is not required.

Furthermore, according to the content output system according to the embodiments, synchronization may be performed accurately and quickly because synchronization is performed based on a system time identically set in all devices without the need to check whether synchronization of content is required.

Effects according to the embodiments are not limited to the above-described effects, and other effects not mentioned herein will be clearly understood by those skilled in the art from the present specification and the accompanying drawings.

### [Description of Drawings]

FIG. 1 is a diagram illustrating a content output system according to one embodiment installed on a display shelf of a retail store.
FIG. 2 is a diagram for explaining a server illustrated in FIG. 1.
FIG. 3 is a diagram visualizing the content output system according to one embodiment.
FIG. 4A is a diagram for explaining an example of a synchronization process of the content output system.
FIG. 4B is a flowchart illustrating the synchronization process of FIG. 4A.
FIG. 5A is a diagram for explaining another example of the synchronization process of the content output system.
FIG. 5B is a flowchart illustrating the synchronization process of FIG. 5A.
FIGS. 6A to 6E are diagrams for explaining synchronization according to relationships between contents and types of contents.

### [Mode for Invention]

The terms used in the embodiments are selected from currently widely used general terms as much as possible while considering the functions in the present disclosure. However, the terms may vary depending on the intention of those skilled in the art, precedents, or the emergence of new technologies. In addition, in certain cases, terms arbitrarily selected by the applicant may be used, and in such cases, their meanings will be described in detail in the relevant portions of the description. Accordingly, the terms used in the present disclosure should be interpreted based not merely on the names of the terms but on the meanings of the terms and the overall contents of the present disclosure.

Throughout the specification, when a certain part is described as "including" a certain component, this means that other components may be further included unless otherwise specified, rather than excluding other components. In addition, the terms such as "unit" or "module" used in the specification refer to a unit that processes at least one function or operation, and may be implemented in hardware, software, or a combination of hardware and software.

As used herein, when expressions such as "at least one of" precede a list of elements, the expression modifies the entire list rather than each element individually. For example, the expression "at least one of a, b, and c" should be interpreted as including a, b, c, a and b, a and c, b and c, or a, b, and c.

Hereinafter, embodiments of the present disclosure will be described in detail with reference to the accompanying drawings so that those skilled in the art may easily implement the present disclosure. The present disclosure may be embodied in forms implementable in the various content output systems described above or may be implemented in various different forms and is not limited to the embodiments described herein.

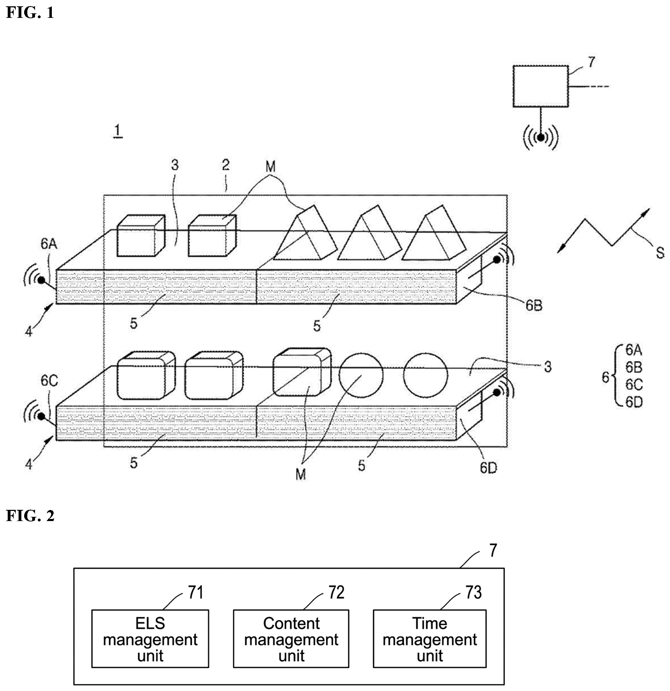

FIG. 1 is a diagram illustrating a content output system according to one embodiment installed on a display shelf of a retail store.

Referring to FIG. 1, a content output system 1 according to one embodiment is illustrated. The content output system 1 is installed in a retail store, and a display shelf 2 of the retail store is illustrated in FIG. 1. The display shelf 2 includes two floors 3, and products M are placed on the floors 3.

Each display shelf floor 3 may include a shelf rail 4. Two screens 5 may be attached along one shelf rail 4. The two screens 5 are each part of two identical display devices 6A and 6B.

The plurality of display devices 6 may output content transmitted from outside the devices. Here, the content may include videos, images, audio, text, and the like related to product advertisements. The first display device 6A may output content through the left screen 5 on the upper floor 3, and the second display device 6B may output content through the right screen 5 on the upper floor 3. Similarly, other display devices 6C and 6D may output content through two screens 5 on the lower floor 3. However, the number of display devices 6 is not limited to those illustrated.

The content output system 1 according to one embodiment may include a server 7. The server 7 may communicate with the plurality of display devices 6 through a wireless signal S and may perform various roles in relation to the plurality of display devices 6. The role of the server 7 will be described in detail with reference to FIG. 2.

FIG. 2 is a diagram for explaining the server illustrated in FIG. 1.

In the following description of FIG. 2, reference will be made to the components of the content output system 1 illustrated in FIG. 1.

Referring to FIG. 2, the server 7 may include an electronic shelf label (ESL) management unit 71, a content management unit 72, and a time management unit 73.

The ESL management unit 71 is a module related to the output of an electronic shelf label (ESL), that is, an electronic price label. The ESL management unit 71 may manage product information and may also manage electronic shelf label information that displays the product information.

The content management unit 72 is a content management system (CMS), which is a module for managing content as indicated by its name. The content management unit 72 may manage content output from the display devices 6 and may also manage the display devices 6. The content management unit 72 may transmit the managed content to the display devices 6 through wireless signals.

The content management unit 72 may control each of the plurality of display devices 6 to output content independently. Accordingly, the plurality of display devices 6 may output the same content, may output mutually related content, or may output different content.

At this time, the respective modules may interoperate with each other. For example, the ESL management unit 71 and the content management unit 72 may be interlinked. Accordingly, the server 7 may control the display devices 6 so that product information corresponding to the content output from each of the plurality of display devices 6 is output.

For example, when the first display device 6A outputs an advertisement for chocolate, the server 7 may control the first display device 6A so that product information related to the chocolate is output together. At the same time, when the second display device 6B outputs an advertisement for candy, the server 7 may control the second display device 6B so that product information related to the candy is output together.

Under the control of the content management unit 72 or the server 7, each of the plurality of display devices 6 may independently output content, and a plurality of playback regions within one display device 6 may also output different content. In addition, the server 7 may control the display device 6 so that product information corresponding to the content output in each of the plurality of playback regions is displayed.

The time management unit 73 is a module for managing system time. The time management unit 73 may synchronize the system times of the plurality of display devices 6 through a wireless signal S. By the time management unit 73, the system times of the plurality of display devices 6 may be set identically. The time management unit 73 and content synchronization will be described later.

According to one embodiment, since a single server 7 includes modules having various functions, a server or an administrator of the retail store may control the output of the display devices 6 by managing only the single server 7. Accordingly, the content output system according to one embodiment may provide convenience to the administrator in terms of management of the plurality of display devices 6 and the entire store.

Meanwhile, according to embodiments, the above-described modules may exist as separate servers performing respective functions. For example, an ESL server, a content management server, and a time server may exist independently.

The ESL server may perform the same role as the ESL management unit 71. That is, the ESL server may manage product information and may also manage electronic shelf label information for displaying the product information.

The content management server may perform the same role as the content management unit 72. That is, the content management server may manage content output from the display devices 6 and control each of the plurality of display devices 6 to output content independently.

The time server may perform the same function as the time management unit 73. That is, the time server may synchronize system times of the plurality of display devices 6, and the system times of the plurality of display devices 6 may be set to be identical by the time server.

The respective servers may interoperate with each other. For example, the ESL server interlinked with the content management server may transmit the product information to the display devices 6 through the content management server or independently. The display device 6 receiving the product information may output the product information independently of the content output.

Accordingly, even when content for advertising a product and product information (including an electronic shelf label) are output on one display device, the content and product information may be independently managed by two servers, thereby preventing server overload.

Hereinafter, description will be made mainly based on an embodiment in which a single server 7 includes various modules.

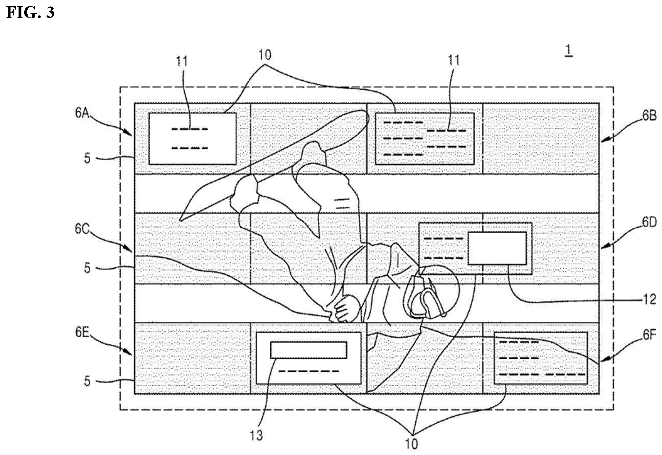

FIG. 3 is a visualization of the content output system according to one embodiment.

In the following description of FIG. 3, reference will be made to the components of the content output system 1 illustrated in FIG. 1 and the server 7 illustrated in FIG. 2.

Referring to FIG. 3, snapshots of video content distributed to six display devices 6A to 6F by the server 7 are illustrated. According to this embodiment, each of the device 6A to 6F may drive a single screen 5.

Each of the display devices 6A to 6F may control playback on the respective screens 5. Two screens 5 may cover one of the shelf rails 4. Each shelf rail 4 forms a front portion of the display shelf floor 3, and in this case, board goods (not illustrated) may be provided on the front portion. Three display shelf floors 3 may be arranged vertically in parallel as part of the display shelf 2.

The screen 5 of one display device 6 is divided into two regions by a dash-dot line. The dash dot-line does not actually divide the screen 5, but indicates that one display device 6 includes a plurality of playback regions.

As illustrated in FIG. 3, when the size of the content to be output is large, a single display device 6 may not properly represent the content. In this case, the content management unit 72 or one module of the server 7 may distribute one piece of content to at least some of the plurality of display devices 6. However, according to embodiments, a separate content distribution server or content distributor may be provided apart from the server 7.

At least some of the plurality of display devices 6 may output respective divided portions of one piece of content in order to collectively display the single piece of content. Such an output method may include assigning separately produced video content to each display device 6. Accordingly, a visually unified video content may be implemented as a whole.

Referring to FIG. 3, the plurality of display devices 6A to 6F may be programmed by the content management unit 72 so as to reproduce only portions of the video content with respective zoom settings.

The zoom for the upper screens 5 mounted on the upper shelf rail 4 is set to an upper portion of the video so as to present a snapshot of the board worn by a person riding a board. The zoom for the screens 5 on the middle shelf rail 4 is set to a central portion of the video so as to present a snapshot of the legs and arms of the person riding the board. The zoom for the screens 5 on the lower shelf rail 4 presents a snapshot of a snow-covered landscape.

In FIG. 3, the zoom for each region of the video is implemented by using a well-known video function called a "viewbox". Video content outside the three individual zoom settings cannot be viewed on the screens 5. However, in the spatial arrangement of the display shelf, the regions between the screens 5 may be used to provide board-related products.

In addition, the screens 5 of the display devices 6A to 6F may output a virtual electronic shelf label 10. The virtual electronic shelf label 10 is displayed at an appropriate position corresponding to the location of board goods placed on the display shelf floor 3.

The virtual electronic shelf label 10 may be output to each of the display devices 6A to 6F by the ESL management unit 71 or the server 7. In this case, the electronic shelf label 10 may be output to the display devices 6A to 6F by overlapping the video content or by replacing the video content.

The electronic shelf label 10 may include text information related to the product or product price information illustrated by a dotted line 11. The electronic shelf label 10 may further include a photograph 12 or a video 13 related to the product independently of the video content. Accordingly, the display devices 6A to 6F may output product information in the form of the electronic shelf label 10 simultaneously with the output of the content.

Meanwhile, in a case where the plurality of display devices 6 divide and output one piece of content, when playback points differ among the display devices 6, a partial error may occur in the single piece of content. In such a case, a process of synchronizing the content output by the display devices 6 may be required.

Hereinafter, a process of synchronizing the content using system times identically set for each display device 6 by the time management unit 73 or the server 7 will be described.

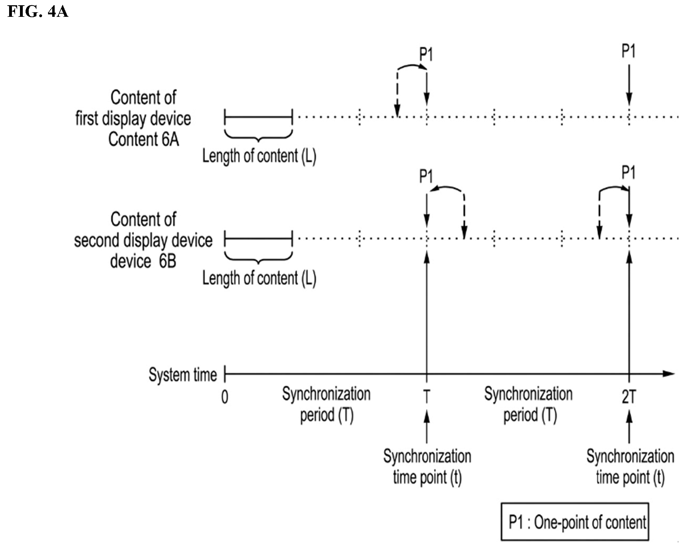

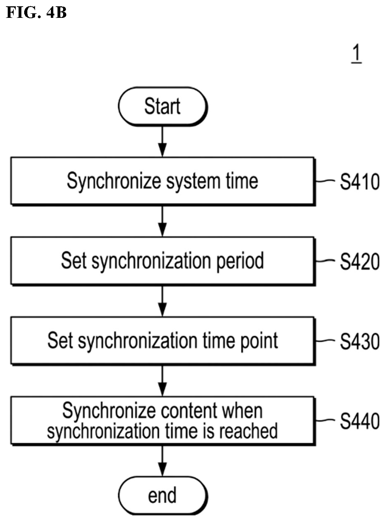

FIG. 4A is a diagram for explaining an example of a synchronization process of the content output system, and FIG. 4B is a flowchart illustrating the synchronization process of FIG. 4A.

In describing an example of the synchronization process of FIGS. 4A and 4B, reference will be made to the components of the content output system 1 illustrated in FIG. 1 and the server 7 illustrated in FIG. 2.

Referring to FIG. 4A, the time management unit 73 or the server 7 may set a synchronization time point t of content on the system time of the plurality of display devices 6. The content output by each of the plurality of display devices 6 may be synchronized when the synchronization time point t is reached.

For example, the synchronization time point t may be determined according to a synchronization period T of the content. When the system time at the moment when the display device 6 starts outputting the content is identically set to 0 and a synchronization period for synchronizing the content by the server 7 is defined as T, a first synchronization time point t on the system time is T, which is a time point after T has elapsed from 0, and a second synchronization time point t is 2T, which is a time point after T has elapsed from T.

At every synchronization time point t, the server 7 may calculate an elapsed time after the start of the content output on the system time based on the synchronization period T and may control the plurality of display devices 6 to output the content from "one-point P1 of the content" corresponding to the elapsed time. In this case, outputting the content from one-point P1 of the content may mean not only adjusting a playback point of the content but also newly outputting the content from the corresponding point.

The first display device 6A outputs content at a point earlier than a one-point P1 of the content until just before reaching T, which is the first synchronization time point t on the system time (indicated by an arrow illustrated by a dotted line). When T, which is the synchronization time point t, is reached, the first display device 6A may output the content from the one-point P1 of the content, which is a preceding playback point, by the server 7 (indicated by an arrow illustrated by a solid line).

The same principle may be applied when 2T, which is the second synchronization time point t on the system time, is reached. In this case, it should be noted that an arrow indicated by a dotted line is not illustrated since no error occurs in the playback time and the playback point in the first display device 6A.

The second display device 6B outputs content at a point later than the one-point P1 of the content until just before reaching T, which is the first synchronization time point t on the system time (indicated by an arrow illustrated by a dotted line). When T, which is the synchronization time point t, is reached, the second display device 6B may output the content from the one-point P1 of the content, which is a previous playback point, under control of the server 7 (indicated by an arrow illustrated by a solid line).

Accordingly, even when each of the contents output by the plurality of display devices 6 has different playback points due to errors in playback time or playback position, the content output from the plurality of display devices 6 may be synchronized to an accurate playback point on the system time.

Meanwhile, the synchronization period T may be determined according to a length L of the content. As the content management unit 72 and the time management unit 73 interoperate with each other, the server 7 may determine the synchronization period T of the content according to the length L of the content and may set the synchronization time point t of the content on the system time of the plurality of display devices 6 based on the synchronization period T.

For example, when the length of the content is relatively short, such as about 10 seconds to 15 seconds, the synchronization period T may be set to 10 minutes. When the starting point of content output on the system time is set to 0, the synchronization time points t may exist every 10 minutes, such as 10 minutes, 20 minutes, and 30 minutes.

Meanwhile, as the length L of the content increases, the probability that an error in the playback time and the playback point of the content occurs increases. Accordingly, the synchronization period T of the content may be relatively shorter than the length L of the content.

Each of the plurality of display devices 6 may output the content from the one-point P1 of the content corresponding to the synchronization time point t when the synchronization time point t is reached.

Referring to FIG. 4B, a content synchronization process of the content output system 1 based on the synchronization period is illustrated.

In Step S410, the time management unit 73 or the server 7 may synchronize the system times of the plurality of display devices 6. Accordingly, the system times of the plurality of display devices 6 may be set identically.

In Step S420, the server 7 may set the synchronization period T of the content to be output by the display devices 6. In this case, the synchronization period T may be determined according to the length L of the content.

In Step S430, the server 7 may set the synchronization time point t of the content on system times of the plurality of display devices 6 based on the synchronization period T.

In Step S440, the server 7 may calculate an elapsed time after the start of content output on the system time based on the system time and the synchronization period T and may control the plurality of display devices 6 to output the content from the one-point P1 of the content corresponding to the elapsed time. Each of the plurality of display devices 6 may synchronize the content under the control of the server 7 when the synchronization time point t is reached on the system time.

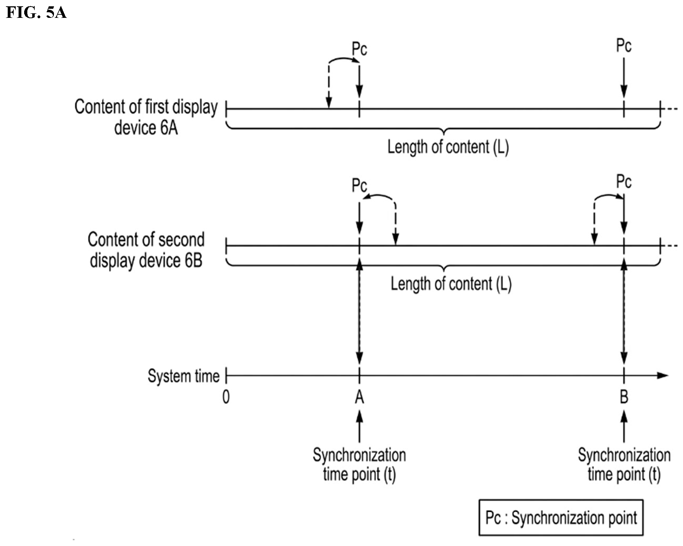

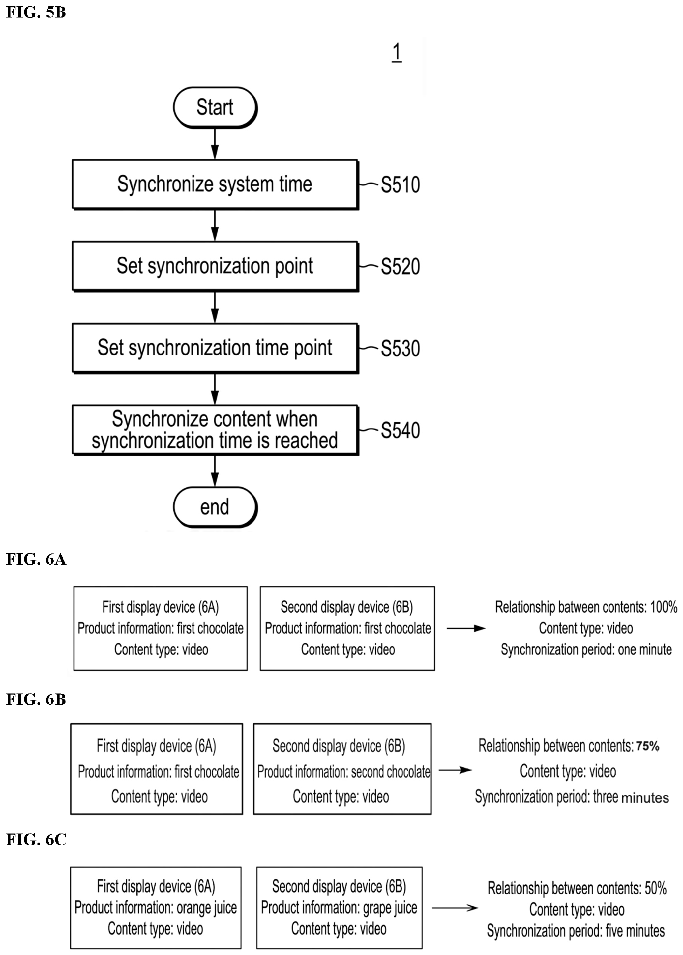

FIG. 5A is a diagram illustrating another example of the synchronization process of the content output system. FIG. 5B is a flowchart illustrating the synchronization process of FIG. 5A.

In describing another example of the synchronization process of FIGS. 5A and 5B, reference will be made to the components of the content output system 1 illustrated in FIG. 1 and the server 7 illustrated in FIG. 2.

Referring to FIG. 5A, the length L of the content is illustrated as being relatively longer compared with FIG. 4A. In FIG. 4A, since an interval between two synchronization time points t is greater than the length L of the content, the content is synchronized after being repeatedly output n times. In contrast, in FIG. 5A, since the interval between two synchronization time points t is smaller than the length L of the content, synchronization of the content may occur before the content is repeatedly output.

In this case, in FIG. 5A, a method of synchronizing the content according to a synchronization point Pc within the content that is preset irrespective of the synchronization period is illustrated. The server 7 may set the synchronization point Pc within the content and may set synchronization time points t of the content on system times of the plurality of display devices 6.

More specifically, the server 7 may calculate a time required to reach the synchronization point Pc within the content after the start of the content output on the system time, and may set the synchronization time point t corresponding the time.

The synchronization point Pc within the content may be a point arbitrarily set by a user. For example, the synchronization point Pc may correspond to a point that the user considers important within the content. The synchronization point Pc within the content may be set according to the length L of the content. For example, as the length L of the content increases, the number of points that the user considers important within the content may increase, and accordingly the number of synchronization points Pc within the content may also increase.

Each of the plurality of display devices 6 may output the content from a synchronization point Pc in the content when the synchronization time point t on the system time is reached, the synchronization being performed by the server 7. In this case, outputting the content from the synchronization point Pc in the content may mean not only adjusting a playback point of the content but also newly outputting the content from the corresponding point.

The first display device 6A outputs content at a point earlier than the synchronization point Pc in the content until just before reaching A, which is the first synchronization time point t on the system time (indicated by an arrow illustrated by a dotted line). When A, which is the synchronization time point t, is reached, the first display device 6A may output the content from the synchronization point Pc in the content, which is a preceding playback point, under control of the server 7 (indicated by an arrow illustrated by a solid line).

The second display device 6B outputs content at a point later than the synchronization point Pc in the content until just before reaching A, which is the first synchronization time point t on the system time (indicated by an arrow illustrated by a dotted line). When A, which is the synchronization time point t, is reached, the second display device 6B may output the content from the synchronization point Pc in the content, which is a previous playback point, under control of the server 7 (indicated by an arrow illustrated by a solid line).

The same principle may be applied when B, which is the second synchronization time point t on the system time, is reached. In this case, it should be noted that an arrow indicated by a dotted line is not illustrated since no error occurs in the playback time and the playback point in the first display device 6A.

According to this, even when each of the contents output by the plurality of display devices 6 has an error in the playback time or playback point so that the playback points become different from one another, the contents output by the plurality of display devices 6 may be synchronized to an accurate playback point on the system time.

Referring to FIG. 5B, the content synchronization process of the content output system 1 based on the synchronization points within the content is illustrated.

In Step S510, the time management unit 73 or the server 7 may synchronize system times of the plurality of display devices 6. Accordingly, the system times of the plurality of display devices 6 may be identically set.

In Step S520, the server 7 may set the synchronization point Pc within the content to be output by the display devices 6. In this case, the synchronization point Pc within the content may be determined according to the length L of the content.

In Step S530, the server 7 may set the synchronization time point t of the content on the system times of the plurality of display devices 6 based on the synchronization point Pc within the content. For example, the server 7 may calculate a time required to reach the synchronization point Pc within the content after the start of content output on the system time and may set the synchronization time point t corresponding to the time.

In Step S540, the server 7 may control the plurality of display devices 6 to output the content from the preset synchronization point Pc within the content. Each of the plurality of display devices 6 may synchronize the content under the control of the server 7 when the synchronization time point t is reached on the system time.

Meanwhile, the above descriptions have been made based on a case in which various modules are included in one server 7, as described above. According to an embodiment, the various modules may exist in the form of separate servers. For example, a time server existing separately from an ESL server and a contents management server may set synchronization time points of content on system times of the plurality of display devices 6, and accordingly the content output by each of the plurality of display devices 6 may be synchronized when the set synchronization time point is reached.

FIGS. 6A to 6E are diagrams illustrating synchronization according to relationships between contents and types of contents.

In describing another example of the synchronization process of FIGS. 6A to 6E, reference will be made to the components of the content output system 1 illustrated in FIG. 1 and the server 7 illustrated in FIG. 2.

In the content output system 1 according to one embodiment, the server 7 may set the synchronization time points on the system times of the plurality of display devices 6 according to relationships between contents output by the plurality of display devices 6.

In describing relationships between contents below, the numerical values described are merely exemplary, and numerical values indicating relationships between contents may be calculated differently according to an algorithm preset in the server 7.

Referring to FIG. 6A, the first display device 6B outputs video content related to a first chocolate, and the second display device 6B outputs video content related to the first chocolate. Since the product information is the same first chocolate, the server 7 may determine that the relationship between the two contents is 100%. Here, the relationship of 100% between the two contents may mean that the contents output by the two display devices 6A and 6B are identical. Accordingly, the server 7 may determine a synchronization period of one minute, which is relatively short, and may set synchronization time points based thereon.

Referring to FIG. 6B, the first display device 6A outputs video content related to a first chocolate, and the second display device 6B outputs video content related to a second chocolate. Since the two products share a common feature in that both are chocolates but differ in type, the server 7 may determine that the relationship between the two contents is 75%. Accordingly, the server 7 may determine a synchronization period of three minutes, which is longer than that of the case where the relationship between contents is 100%, and may set the synchronization time point based thereon.

Referring to FIG. 6C, the first display device 6A outputs video content related to orange juice, and the second display device 6B outputs video content related to grape juice. Since the two products share a common feature in that both are juices but differ in the fruits that determine the flavor of the juices, the server 7 may determine that the relationship between the two contents is 50%. Accordingly, the server 7 may determine the synchronization period as 5 minutes, which is longer than a case in which the relationship between contents is 75%, and may set the synchronization time point based thereon.

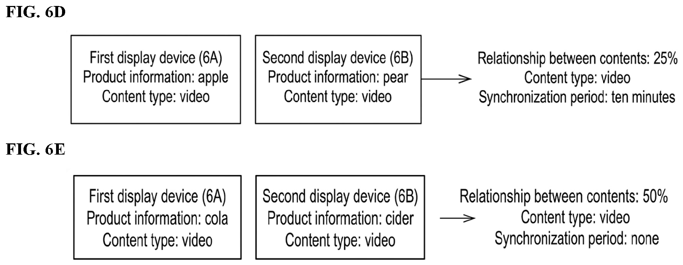

Referring to FIG. 6D, the first display device 6A outputs video content related to apples, and the second display device 6B outputs video content related to pears. Since the two products share a common feature in that both are fruits but are different types of fruits, the server 7 may determine that the relationship between the two contents is 25%. Accordingly, the server 7 may determine the synchronization period as 10 minutes, which is longer than that in a case where the relationship between contents is 50%, and may set the synchronization time point based thereon.

Meanwhile, the server 7 may determine whether synchronization of content is required according to a type of the content. The type of the content may include various media capable of advertising a product, such as video, image, audio, and text.

Referring to FIG. 6E, the first display device 6A outputs photographic content related to cola, and the second display device 6B outputs video content related to cider. Although the two products share a common feature in that both are carbonated beverages, the ingredients that determine the flavor are different, and thus the server 7 may determine that the relationship between the two contents is 50%.

However, regardless of the relationship between the contents, synchronization may not be required because the first display device 6A outputs photographic content. Accordingly, the server 7 may identify content that does not require synchronization and may exclude the first display device 6A outputting the corresponding content from synchronization targets.

Even when only one of the plurality of display devices 6A and 6B outputs content requiring synchronization, synchronization may not be necessary. In this case, the server 7 may not set the synchronization period or the synchronization time point of the content.

As described above, the synchronization of content output by the plurality of display devices 6 has been described. However, the same principle may also be applied between a plurality of playback regions within a single display device 6. For example, the server 7 may set synchronization time points of content on system times of the plurality of playback regions, and contents output from the plurality of playback regions may be synchronized when the synchronization time point is reached.

According to the content output system 1 of one embodiment, the "content for advertising a product" and the "product information and the virtual electronic shelf label including the same may be output through the display device, thereby providing convenience in terms of management to an administrator of a retail store.

In addition, according to the content output system 1 of one embodiment, since the server distributes images to the display devices and performs synchronization of the content, the content output system may be easily configured without requiring a separate physical connection among the plurality of display devices.

In addition, according to the content output system according to embodiments, the synchronization may be accurately and quickly performed because the synchronization is performed based on system times identically set in all display devices without checking whether synchronization of the content is required.

The foregoing descriptions of the embodiments are merely illustrative, and those skilled in the art will appreciate that various modifications and equivalent other embodiments may be made therefrom. Accordingly, the true scope of protection of the present disclosure should be determined by the appended claims, and all differences within the scope equivalent to the matters set forth in the claims should be construed as being included in the scope of protection defined by the claims.

### [Industrial Applicability]

The present disclosure has industrial applicability in that management efficiency of a retail store administrator may be improved by outputting product-related content and product information on a plurality of electronic shelf labels, and at the same time synchronization of the plurality of electronic shelf labels may be automatically controlled based on system time, thereby improving efficiency in controlling the plurality of electronic shelf labels.

## Claims

1. A content output system capable of performing a function of a virtual electronic shelf label (ESL), the content output system comprising:
a plurality of display devices configured to output content transmitted from an external source; and
a server configured to manage product information and electronic shelf label information for displaying the product information,
wherein each of the plurality of display devices independently outputs the content and the product information transmitted from the server.

2. The content output system of claim 1, wherein the server includes a content management unit configured to manage content output by the display devices, and
the content management unit controls each of the plurality of display devices to independently output content.

3. The content output system of claim 2, wherein the content management unit distributes one piece of content to at least some of the plurality of display devices, and
the at least some of the plurality of display devices respectively output divided portions of the one piece of content in order to collectively display the one piece of content.

4. The content output system of claim 1, wherein the server controls the display devices such that product information corresponding to content output from each of the plurality of display devices is output.

5. The content output system of claim 1, wherein the server further includes a time management unit configured to synchronize system times of the plurality of display devices, and
system times of the plurality of display devices are identically set by the time management unit.

6. The content output system of claim 5, wherein the time management unit sets a content synchronization time point on the system times of the plurality of display devices, and
the content output from each of the plurality of display devices is synchronized when the synchronization time point is reached.

7. The content output system of claim 1, wherein the server determines a synchronization period of the content according to a length of the content, and sets synchronization time points of the content on system times of the plurality of display devices based on the synchronization period, and
each of the plurality of display devices outputs the content from one-point of the content corresponding to the synchronization time point when the synchronization time point is reached.

8. The content output system of claim 1, wherein the server sets a synchronization point within the content according to a length of the content and sets synchronization time points of the content on system times of the plurality of display devices based on the synchronization point within the content, and
each of the plurality of display devices outputs the content from the synchronization point within the content when the synchronization time point is reached.

9. The content output system of claim 1, wherein the server sets synchronization time points of the plurality of display devices according to relationships between contents output by the plurality of display devices.

10. The content output system of claim 1, wherein the server determines whether synchronization of content is required according to a type of the content.

11. The content output system of claim 1, wherein each of the plurality of display devices includes a plurality of playback regions, and
wherein each of the plurality of playback regions outputs different content under control of the server.

12. The content output system of claim 11, wherein the server controls the display device such that product information corresponding to content output to each of the plurality of playback regions is output.

13. The content output system of claim 1, further comprising a content management server configured to manage content output by the display devices,
the content management server controls each of the plurality of display devices to independently output content.

14. The content output system of claim 1, further comprising a time server configured to synchronize system times of the plurality of display devices,
wherein system times of the plurality of display devices are identically set by the time server,
the time server sets synchronization time points of the content on the system times of the plurality of display devices, and
the content output from each of the plurality of display devices is synchronized when the synchronization time point is reached.

15. The content output system of claim 1, wherein the display device outputs the product information in a form of the electronic shelf label overlapping the content or replacing the content.
